# EUROPEAN PATENT SPECIFICATION

(11) **EP 0 381 336 B1**
(45) Date of publication and mention of the grant of the patent: **24.05.1995**
(21) Application number: 90300514.8
(22) Date of filing: 18.01.1990
(51) Int. Cl.: F16C 17/18, F16C 17/10, F16C 33/04, F16C 33/12

(54) **Ceramic bearing**
Keramikgleitlager
Palier en céramique

(30) Priority: 02.02.1989 JP 22576/89
(43) Date of publication of application: 08.08.1990
(73) Proprietor: WING HIGHCERA CO., LTD., Mizunami-shi Gifu Ken (JP)
(72) Inventor: Momose, Terunobu, Mizunami-shi, Gifu Ken (JP); Shitata, Tetsuo, Mizunami-shi, Gifu Ken (JP)
(74) Representative: Pacitti, Pierpaolo A.M.E.

(56) References cited:
- EP-A- 0 178 169
- GB-A- 107 152
- GB-A- 1 437 532
- GB-A- 2 182 105

## Description

### Field of the Invention

This invention relates to a ceramic bearing comprising a ceramic outer ring, a ceramic inner ring, and a ceramic sliding ring which is fitted between a ceramic outer ring and a ceramic inner ring.

### Description of the Prior Art

Up to the present, when installing a rotating shaft, a bearing such as a sliding bearing or a rolling bearing is commonly used.

The rolling bearing comprises rolling members such as balls, rollers, or needles which are positioned between an outer ring fitted into a housing provided in a mechanical frame and an inner ring into which a rotating shaft is installed. The rolling bearing are classified into ball, rolling, and needle bearings according to the type of a rolling member used ( Japanese Patent Publication No.49-41231 ).

Among these bearings, deep-groove type, angular ball type, and taper-roller type bearings are used as a bearing capable of supporting a shaft to which radial and thrust loads are applied at the same time.

Some of the sliding bearings include a steel, cast iron, or copper support on which a white metal layer is laminated and held in a predetermined dimension by machining, or copper or gun-metal support which an oil-impregnated alloy is laminated on or embedded into.

A sliding bearing having a sleeve-shaped support is used as a bearing for supporting radial load ( Japanese Patent Publication No. 49-18885 ). In addition, a sliding bearing whose metal support is formed in disk-shape also is used to support a thrust load ( Japanese Patent Publication No.49-678 ).

Said rolling and sliding bearings are standarized, many of them are commonly available and have its features respectively. In practical use, these bearings are designed to be suited to its use in consideration of its features.

However, even said sliding and rolling bearings still have some difficult problems.

For example, the following problems arise from a rolling bearing: A flaking caused from rolling fatigue will limit its service life and its heat resistance is low, additionaly, the cost may rise due to a relatively larger number of components, and rolling members being worn will cause a noise.

In sliding bearings, since an outside circumference of a journal portion of a shaft as well as an inside circumference support a load applied to the shaft in close contact with each other, a sliding friction on contacting surfaces will generates heat. The amount of generated heat depends on a load applied to a shaft and a sliding speed. The amount of heat increases with rising speed, and causes the thermal expansion of the shaft and bearing, and thus, it is likely to have an adverse effect on a smooth rotation of the shaft. In addition, as the journal portion of the shaft and the inside circumfernce of the bearing also slide in close contact with each other, wear results on the shaft and bearing, and the wear also is possible to obstruct the smooth rotation of the shaft.

Further, in a sliding bearing, a load per unit area which the sliding bearing can support depends on the sort of material of the bearing. In conventional silding bearing, iron or copper-based metal is employed as a material, however, the allowable pressure per unit area is smaller than that of ceramics, therefore a larger pressured area is needed to support a large load, and the sliding bearing gives rise to another problem that its size tends to become larger.

Besides, in a sliding bearing, when supporting a shaft to which thrust and radial loads are applied at the same time, there exist other problems that a sleeve-shaped radial bearing and a disk-shaped thrust bearing must be utilized in combination, or a bearing suitable to its use must be designed each time.

The generic GB-A-107,152 discloses a three-part bearing comprising an inner ring for mounting on a shaft, an outer ring to be secured to a machine frame or the like, and an intermediate ring which slides relative to the inner and outer rings. The rings are formed with complementary step formations to provide axial location. The material from which these parts are made is stated to be "any suitable metal". Moreover, the interfitting formations are of such shape that a relatively high degree of friction and wear are likely.

### Summary of the Invention

It is an object of the present invention to provide a sliding bearing capable of supporting a shaft to which a large load is applied and which rotates at a high speed.

Another object of the present invention is to provide a bearing having a small number of components by utilizing a ceramic inner ring, a ceramic outer ring, and a ceramic sliding ring.

Accordingly, the invention provides a ceramic bearing as defined in Claim 1 and in Claim 2 hereinafter.

As above described, the ceramic sliding ring (to be called "sliding ring") is positioned between the ceramic outer ring (to be called "outer ring") and the ceramic inner ring (to be called "inner ring"), thereby, a load which is applied to a shaft installed in the inner ring is transmitted from the inner ring, through the sliding ring, to the outer ring, and is supported. Since each ring is formed of ceramics, the compressive strength of each ring is higher than that of iron or copper-based metal, and the allowable load of the bearing therefore can be larger than that of a conventional sliding ring.

In addition, between the inner ring and outer ring, there are formed a sliding surface between an outside circumference of the inner ring and an inside circumference of the sliding ring, and another sliding surface between an outside circumference of the sliding ring and an inside circumference of the outer ring. Thereby, when the inner ring rotates at the same rotating speed as that of the shaft fitted into the inner ring, the sliding ring rotates at a rotating speed lower than that of the inner ring, following the inner ring in rotation. Thus, the relative rotating speed of the inner ring to the outer ring can be shared between these sliding surfaces. The sliding speed on each sliding surface is lower than the speed when the outer ring and inner ring rotate in direct contact with each other, and heat and wear produced on each sliding surface will be reduced. When the bearing is designed, providing the sliding speed on each sliding surface has a design standard, the bearing can support a shaft rotating at a higher speed.

Moreover, as no sliding takes place between the inner ring with the shaft journal being fitted and the shaft, the shaft will never wear down.

### Brief Description of the Drawings

Fig. 1 (a) is a sectional view illustrating the bearing of the first embodiment of the present invention.
Fig. 1 (b) is an exploded perspective view illustrating components of the bearing of the first embodiment of the present invention.
Fig. 2 is a sectional view illustrating the bearing of the second embodiment of the present invention.
Fig. 3 is a sectional view illustrating the bearing of the third embodiment of the present invention.
Fig. 5 is a sectional view illustrating the bearing of the fourth embodiment of the present invention.

### Detailed Description of the Preferred Embodiments

### (the First Embodiment)

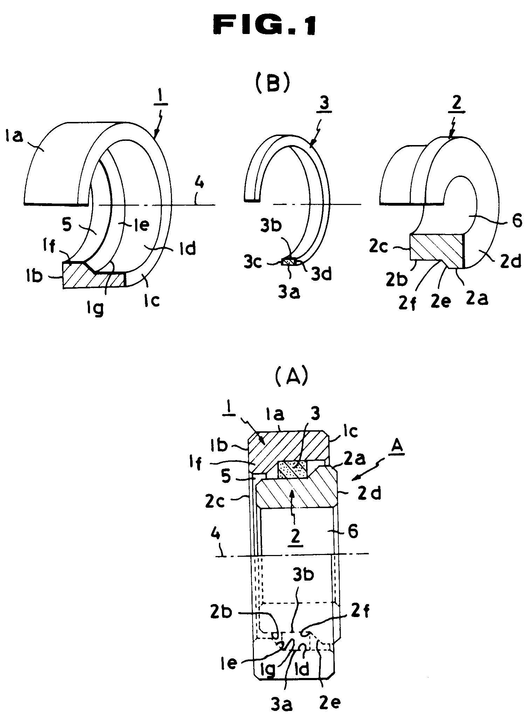

In Fig.1(A) and (B), a bearing comprises an outer ring 1, an inner ring 2, and a sliding ring 3 which is fitted between the outer ring 1 and the inner ring 2.

The outer ring 1 is produced through the process steps that an oxide ceramics material based on Partially-Stabilized-Zirconia ( to be called "PSZ" hereinafter ) or alumina is charged into a mold and is press-formed, and a molded compact ring is sintered at 1500°C to 1600°C.

A form of the outer ring 1 is formed with a cylindrical outside circumference portion 1a and end faces 1b and 1c. The outside circumference portion 1a is a fit-into surface for being installed in a housing which is provided in a machine. To make a precise fitting, the outside circumference portion 1a is parallel to an axial center 4 of the outer ring 1 and holds a predetermined diameter and its tolerance. The end face 1b has a through bore 5.

The inside circumference of the outer ring 1 includes a sliding surface 1d which has a predetermined length in the axial direction from the end face 1c. The sliding surface 1d is in cylindrical-shape and parallel to the axial center 4. A tapered surface 1e is formed between the sliding surface 1d and the through bore 5, and the outer ring 1 incorporates a circumferential protrusion 1f on the inside cicumference on the end face 1b side.

The inner ring 2 is produced through the process steps that an oxide ceramics material of PSZ or alumina is charged into a mold and press-formed, and the moled compact ring is sintered at 1500°C to 1600°C.

A form of an inner ring 2 is formed with a flange-shaped, circumferential protrusion 2a, a cylindrical sliding surface 2b, and an end face 2c and 2d, and a tapered surface 2e is formed between the sliding surface 2b and the flange-shaped, circumferential protrusion 2a.

The inner ring 2 has a bore 6 which is in line with the axial center 4 and a shaft ( not shown ) is fitted into the bore 6. The shaft-fitting bore 6 is provided for fitting the shaft to which a radial load, a thrust load, or the resultant load of said loads is applied, and is formed with a predetermined diameter held by its tolerance. When the thrust load is applied to the shaft fitted into the shaft-fitting bore 6, the end face 2d also is provided as a face to which the thrust load is transmitted, in contact with an end face of the shaft.

The sliding ring 3 is produced through the process steps that an oxide ceramics material of PSZ or alumina is charged into a mold and press-formed, and the molded compact ring is sintered at 1500°C to 1600°C.

The sliding ring is formed in sleeve-shape, and the outside circumference of the sliding ring 3 is provided as a sliding surface 3a sliding in contact with the sliding surface 1d formed on the inside circumference of the outer ring 1. The sliding surface 3a holds a predetermined tolerance relative to the sliding surface 1d of the outer ring 1. The inside circumference of the sliding ring 3 also is provided as a silding surface 3b sliding in contact with the sliding surface 2b on the outside circumference of the inner ring 2, and the sliding surface 3b holds a predetermined tolerance relative to the sliding surface 2b on the inner ring 2.

An end face 3c of the sliding ring 3 is formed so that the end face 3c abuts a tapered surface 1e or a neck portion 1g of said tapered surface 1e on the inside circumference of the outer ring 1. An end face 3d of the sliding ring 3 is also formed so that the end face 3d may abut a tapered surface 2e or a neck portion 2f of said tapered surface 2e on the outside circumference of the inner ring 2.

In a bearing constructed as above described, a journal portion ( not shown ) of the shaft is fitted into the shaft-fitting bore 6 in the inner ring 2, and a radial load applied to the shaft is transmitted from the inner ring 2, through the sliding ring 3, to the outer ring 1. When a thrust load is applied to the shaft, a stepped diameter portion of the shaft abuts the end face 2d of the inner ring 2, and thereby the thrust load is transmitted from the inner ring 2, through the sliding ring 3, to the outer ring 1.

For example, when a shaft to which only a radial load is applied is fitted into the shaft-fitting bore 6, starting to rotate the shaft, first the inner ring rotate at the same speed as that of the shaft. Thus, said load is transmitted from the sliding surface 2b on the outside circumference of the inner ring 2 to the sliding surface 3b on the inside circumference of the sliding ring 3, and at the same time, a slide will take place between said sliding surfaces 2b and 3b. Then, a driving force,which depends on a friction coefficient between said sliding surfaces 2b and 3b, a load, and a sliding speed of the inner ring 2, is transmitted to the sliding ring 3, and a slide then will take place between the sliding surface 3a on the outside circumference of the sliding ring 3 and the silding surface 1d on the inside circumference of the outer ring 1.

Now, assuming that all the outer ring 1, the inner ring 2, and the sliding ring 3 employ the same material, and that each factor which will affect frictions of the sliding surfaces 2b, 3b, and 3a, such as surface roughness, are under the same condition, sliding speeds of each sliding surface will become almost the same and smaller than when the inner and outer rings slide in direct contact with each other.

For another example, when only a thrust load is applied to the shaft fitted into the shaft-fitting bore 6, the inner ring 2 rotates at the same speed as that of the shaft, and said load is transmitted from the neck portion 2f of the tapered surface 2e on the outside circumference of said inner ring 2, to the end face 3d of sliding ring 3, and slide will take place between the neck portion 2f and the end face 3d.

As above described, radial and thrust loads are transmitted from the inner ring 2, through the sliding ring 3, to the outer ring 1, and is supported by the bearing.

Thus, it becomes possible to increase an area of sliding surface by fitting the sliding ring 3 between the inner ring 2 and the other ring 1, and the rotation of the inner ring 2 relative to the outer ring 1 will be shared between a plurality of sliding rings. Accordingly, a high-speed rotation shaft can be supported depending on an increment of an area of sliding surface, that is, the high-speed rotating shaft can be supported with the ceramic bearing of the embodiment.

### ( Other Embodiments )

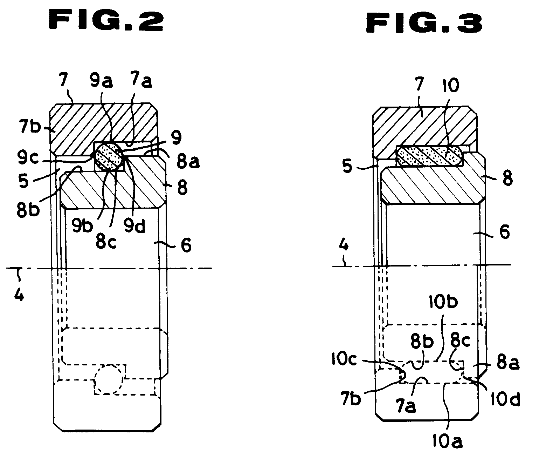

Fig.2 is a sectional view of the second embodiment of the present invention, which relates to a bearing in which a sliding ring having a circular section is fitted between an outer ring 7 and an inner ring 8. In the drawing, the same portion as that of the first embodiment and the portion having the same function as that of the first are marked with the same numerals, and a description on the portions is omitted ( the same to be omitted hereinafter).

The outer ring 7, inner ring 8, and sliding ring 9, likewise as the above described embodiment is, are press-formed of an oxide ceramics material based on PSZ or alumina, and are sintered at 1500°C to 1600°C.

The inside circumference of the outer ring 7 includes a through bore 5 and a sliding surface 7a being parallel to an axial center 4. Said sliding surface 7a has a diameter larger than that of the through bore 5. Thus, a circumferential protrusion 7b is formed between the through bore 5 and the sliding surface 7a. A height of said protrusion 7b is slightly larger than half of a thickness of the sliding ring 9 to be described later, that is, than a circularly sectional radius of that.

There is formed on an outside circumferece of the inner ring 8 a flange-shaped protrusion 8a and a sliding surface 8b. A riser portion 8c is formed between said flange-shaped protrusion 8a and a silding surface 8b, and a height of said riser 8c is slightly higher than half of thickness of the sliding ring 9, that is, than a circularly sectional radius of said sliding ring 9.

The sliding ring 9 has a circular section of the predetermined radius, and each sliding portion 9a to 9d refers to an outside circumferential portion, an inside circumferential portion,or each of end faces respectively.

In said bearing comprising the outer ring 7, the inner ring 8, and the sliding ring 9,the silding portion 9a on the outside circumference of the sliding ring 9 is in contact with the sliding surface 7a on the inside cicumference of the outer ring 7, likewise, the sliding portion 9a is in contact with the sliding surface 8b on the outside circumference of the inner ring 8, and sliding portion 9c is in contact with a riser portion of the protrusion 7b on the inside circumferenceof the outer ring 7, and the sliding portion 9d is in contact with the riser portion 8c on the outside circumference of the inner ring 8, and thus each sliding surface is formed. Thereby, said bearing is constructed so that it is capable of supporting radial and thrust loads applied to the shaft fitted into the inner ring 8.

In the bearing of the embodiment, since the sectional shape is circular and relatively small, a compact construction can be employed.

Fig.3 is a sectional view of a bearing of the third embodiment of the invention, which relates to a bearing which a sliding ring 10 having a elliptic section is fitted between an outer ring 7 and an inner ring 8.

There is formed on an outside circumferential surface of the sliding ring 10 a sliding surface 10a being in contact with a sliding surface 7a on an inside circumferential surface of the outer ring 7, and formed on an inside circumferential surface of the sliding ring 10 a sliding surface 10b being in contact with a sliding surface 8b on an outside circumferential surface of the inner ring 8. Both of the ends an axial cross-section of the silding ring 10 is round-shaped, and one of the ends is a sliding surface 10c being in contact with a riser portion of the protrusion 7b of the outer ring 7, and another end is a sliding surface 10d being in contact with a riser portion 8c of the inner ring 8.

Like the first and second embodiments above described, the bearing of this embodiment can support radial and thrust loads which are applied to the shaft fitted into the inner ring 8. As the cross section of the sliding ring 10 is in elliptic shape, the radial pressured- area may be taken larger.

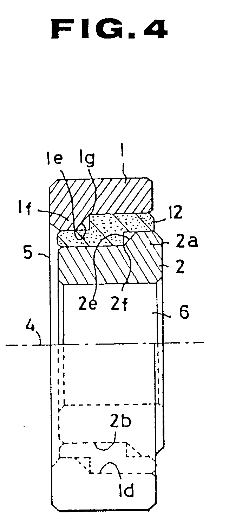

Fig. 4 is a sectional view of a bearing related to the fourth embodiment of the present invention, which relates to a bearing where a sliding 12 having a Z-shaped section is fitted between the outer ring 1 and inner ring 2 shown in Fig. 1.

The bearing of this embodiment can employ the whole of a sliding surface 2b formed on the outside circumference of the inner ring 2 and the outside circumferential surface of the flange-shaped protrusion 2a as a load-pressured area. Thereby, a large load can be supported by this type of bearing.

In each embodiment above described, each sliding surface of the outer ring, inner ring, and sliding ring can be additionally finished by lapping, if necessary. The lapping may be separately made on each of outer, inner, and sliding rings, or may be selectively made by rubbing those rings together with abrasive such as diamond powder poured on the rings. Thus, lapping each sliding surface permits the bearing to rotate smoothly.

In addition, in each embodiment above described, the outer, inner, and sliding rings slide on the sliding surface in contact with each other, and heat is naturally generated by sliding friction. However, since each ring of the embodiments is formed from ceramics material, heat affects the bearing less than it is of metal. That is, the coefficient of the thermal expansion of ceramics is small and an excessive stress will not be produced by thermal expansion, and a thermal deterioration also never occurs.

## Claims

1. A bearing having a central axis (4), comprising an outer ring (1) defining a cylindrical inner sliding surface (1d) and a further sliding surface (1e), a coaxial inner ring (2) defining a cylindrical outer sliding surface (2b) and a further sliding surface (2e) extending outwardly from the outer sliding surface (2b), and a coaxial sliding ring (3;12) which is disposed between the inner ring (2) and the outer ring (1) and which defines
- a cylindrical inner sliding surface (3b) in sliding contact with the cylindrical outer sliding surface (2b) of the inner ring (2),
- a cylindrical outer sliding surface (3a) in sliding contact with the cylindrical inner sliding surface (1d) of the outer ring (1).
- a first end face (3d) extending radially outwardly from the inner surface (3b) of the sliding ring (3;12) and being in sliding contact with the further sliding surface (2e) of the inner ring (2),
- and a second end face (3c) extending radially inwardly from the outer surface (3a) of the sliding ring (3;12) and being in sliding contact with the further sliding surface (1e) of the outer ring (1)
characterised in that
- the outer ring (1), inner ring (2) and sliding ring (3;12) are formed of ceramics,
- the further sliding surface of the outer ring (1) comprises a tapered surface (1e) extending axially and radially inwardly from the inner sliding surface (1d),
- the further sliding surface of the inner ring (2) comprises a tapered surface (2e) extending axially and radially outwardly from the outer sliding surface (2b),
- the first end face (3d) forms a junction with the inner surface (3b) of the sliding ring (3;12) to define a first circumferential edge,
- the second end face (3c) forms a junction with the outer surface (3a) to define a second circumferential edge, and
- the circumferential edges define a line contact with the further sliding surfaces (1e, 2e)

2. A bearing having a central axis (4), comprising an outer ring (7) defining a cylindrical inner sliding surface (7a) and a further sliding surface extending radially inwardly from the inner sliding surface (7a) to form a riser portion, a coaxial inner ring (8) defining a cylindrical outer sliding surface (8b) and a further sliding surface (8c) extending radially outwardly from the outer sliding surface (8b) to form a riser portion and a coaxial sliding ring (9;10) which is disposed between the inner ring (8) and the outer ring (7) and which defines:
- an inner sliding surface (9b;10b) in sliding contact with the cylindrical outer sliding surface (8b) of the inner ring (8),
- an outer sliding surface (9a; 10a) in sliding contact with the cylindrical inner sliding surface (7a) of the outer ring (7),
- a first end face (9d) in sliding contact with the further sliding surface (8c) of the inner ring (8),
- and a second end face (9c) in sliding contact with the further sliding surface of the outer ring (7)
characterised in that
- the outer ring (7), inner ring (8) and sliding ring (9) are formed of ceramics,
- the end faces (9c, 9d; 10c, 10d) are round-shaped to define circumferential sliding line contact with the further sliding surfaces (8c).

3. A bearing according to Claim 2, wherein the coaxial sliding ring (9) is of circular cross-section.

4. A bearing according to Claim 2, wherein the coaxial sliding ring (10) has an elongated cross-section providing axially extending inner and outer sliding surfaces (10b, 10a) and part-circular end faces (10c, 10d)

## Patentansprüche

1. Lager mit einer Mittelachse (4), bestehend aus einem Außenring (1), der eine zylindrische Innengleitfläche (1d) und eine weitere Gleitfläche (1e) definiert, einem koaxialen Innenring (2), der eine zylindrische Außengleitfläche (2b) und eine weitere Gleitfläche (2e) definiert, die von der äußeren Gleitfläche (2b) nach außen verläuft, und einem koaxialen Gleitring (3; 12), der zwischen dem Innenring (2) und dem Außenring (1) angeordnet ist und
- eine zylindrische Innengleitfläche (3b) in einer Gleitberührung mit der zylindrischen Außengleitfläche (2b) des Innenringes (2),
- eine zylindrische Außengleitfläche (3a) in Gleitberührung mit der zylindrischen Innengleitfläche (1d) des Außenringes (1),
- eine erste Endfläche (3d), die von der Innenfläche (3b) des Gleitringes (3; 12) radial nach außen verläuft und in Gleitberührung mit der weiteren Gleitfläche (2e) des Innenringes (2) ist,
- und eine zweite Endfläche (3c) definiert, die von der Außenfläche (3a) des Gleitringes (3; 12) radial nach innen verläuft und in Gleitberührung mit der weiteren Gleitfläche (1e) des Außenringes (1) ist,
dadurch gekennzeichnet, daß
- der Außenring (1), der Innenring (2) und der Gleitring (3; 12) aus Keramik ausgebildet sind,
- die weitere Gleitfläche des Außenringes (1) eine kegelförmig verlaufende Oberfläche (1e) aufweist, die von der inneren Gleitfläche (1d) axial und radial nach innen verläuft,
- die weitere Gleitfläche des Innenringes (2) eine kegelförmig verlaufende Oberfläche (2e) aufweist, die von der äußeren Gleitfläche (2b) axial und radial nach außen verläuft,
- die erste Endfläche (3d) eine Verbindung mit der Innenfläche (3b) des Gleitringes (3; 12) ausbildet, um eine erste Umfangskante zu definieren,
- die zweite Endfläche (3c) eine Verbindung mit der Außenfläche (3a) ausbildet, um eine zweite Umfangskante zu definieren, und
- die Umfangskanten eine Linienberührung mit den weiteren Gleitflächen (1e, 2e) definieren.

2. Lager mit einer Mittelachse (4), bestehend aus einem Außenring (7), der eine zylindrische Innengleitfläche (7a) und eine weitere Gleitfläche definiert, die von der inneren Gleitfläche (7a) radial nach innen verläuft, um einen Stufenbereich auszubilden, einem koaxialen Innenring (8), der eine zylindrische Außengleitfläche (8b) und eine weitere Gleitfläche (8c) definiert, die von der äußeren Gleitfläche (8b) radial nach außen verläuft, um einen Stufenbereich auszubilden, und einen koaxialen Gleitring (9; 10), der zwischen dem Innenring (8) und dem Außenring (7) angeordnet ist, und welcher
- eine innere Gleitfläche (9b; 10b) in einer Gleitberührung mit der zylindrischen äußeren Gleitfläche (8b) des Innenringes (8),
- eine äußere Gleitfläche (9a; 10a) in einer Gleitberührung mit der zylindrischen inneren Gleitfläche (7a) des Außenringes (7),
- eine erste Endfläche (9d) in einer Gleitberührung mit der weiteren Gleitfläche (8c) des Innenringes (8),
- und eine zweite Endfläche (9c) in einer Gleitberührung mit der weiteren Gleitfläche des Außenringes (7) definiert,
dadurch gekennzeichnet, daß
- der Außenring (7), der Innenring (8) und der Gleitring (9) aus Keramik ausgebildet sind,
- die Endflächen (9c, 9d; 10c, 10d) mit einer runden Form versehen sind, um eine umfangsseitige Gleitlinienberührung mit den weiteren Gleitflächen (8c) zu definieren.

3. Lager nach Anspruch 2, bei welchem der koaxiale Gleitring (9) einen kreisförmigen Querschnitt hat.

4. Lager nach Anspruch 2, bei welchem der koaxiale Gleitring (10) einen länglichen Querschnitt hat, der axial verlaufende Innen- und Außengleitflächen (10b, 10a) und teilweise kreisförmige Endflächen (10c, 10d) hat.

## Revendications

1. Palier ayant un axe central (4), comprenant un anneau extérieur (1) définissant une surface de glissement intérieure cylindrique (1d) et une surface de glissement supplémentaire (1e), un anneau intérieur coaxial (2) définissant une surface de glissement extérieure cylindrique (2b) et une surface de glissement supplémentaire (2e) s'étendant vers l'extérieur à partir de la surface de glissement extérieure (2b), et un anneau glissant coaxial (3;12) gui est disposé entre l'anneau intérieur (2) et l'anneau extérieur (1) et qui définit
- une surface de glissement intérieure cylindrique (3b) en contact glissant avec la surface de glissement extérieure cylindrique (2b) de l'anneau intérieur (2),
- une surface de glissement extérieure cylindrique (3a) en contact glissant avec la surface de glissement intérieure cylindrique (1d) de l'anneau extérieur (1),
- une première face d'extrémité (3d) s'étendant radialement vers l'extérieur à partir de la surface intérieure (3b) de l'anneau glissant (3;12) et étant en contact glissant avec la surface de glissement supplémentaire (2e) de l'anneau intérieur (2),
- et une seconde face d'extrémité (3c) s'étendant radialement vers l'intérieur à partir de la surface extérieure (3a) de l'anneau glissant (3;12) et étant en contact glissant avec la surface de glissement supplémentaire (1e) de l'anneau extérieur (1)
caractérisé en ce que
- l'anneau extérieur (1), l'anneau intérieur (2) et l'anneau glissant (3;12) sont formés de céramiques,
- la surface de glissement supplémentaire de l'anneau extérieur (1) comprend une surface conique (1e) s'étendant axialement et radialement vers l'intérieur à partir de la surface de glissement intérieure (1d),
- la surface de glissement supplémentaire de l'anneau intérieur (2) comprend une surface conique (2e) s'étendant axialement et radialement vers l'extérieur à partir de la surface de glissement extérieure (2b),
- la première face d'extrémité (3d) forme une jonction avec la surface intérieure (3b) de l'anneau glissant (3;12) pour définir une première arête circonférentielle,
- la seconde face d'extrémité (3c) forme une jonction avec la surface extérieure (3a) pour définir une seconde arête circonférentielle, et
- les arêtes circonférentielles définissent une ligne de contact avec les surfaces de glissement supplémentaires (1e, 2e).

2. Palier ayant un axe central (4), comprenant un anneau extérieur (7) définissant une surface de glissement intérieure cylindrique (7a) et une surface de glissement supplémentaire s'étendant radialement vers l'intérieur à partir de la surface de glissement intérieure (7a) pour former une marche, un anneau intérieur coaxial (8) définissant une surface de glissement extérieure cylindrique (8b) et une surface de glissement supplémentaire (8c) s'étendant radialement vers l'extérieur à partir de la surface de glissement extérieure (8b) pour former une marche, et un anneau glissant coaxial (9;10) qui est disposé entre l'anneau intérieur (8) et l'anneau extérieur (7) et qui définit :
- une surface de glissement intérieure (9b ; 10b) en contact glissant avec la surface de glissement extérieure cylindrique (8b) de l'anneau intérieur (8),
- une surface de glissement extérieure (9a ; 10a) en contact glissant avec la surface de glissement intérieure cylindrique (7a) de l'anneau extérieur (7),
- une première face d'extrémité (9d) en contact glissant avec la surface de glissement supplémentaire (8c) de l'anneau intérieur (8),
- et une seconde face d'extrémité (9c) en contact glissant avec la surface de glissement supplémentaire de l'anneau extérieur (7)
caractérisé en ce que
- l'anneau extérieur (7), l'anneau intérieur (8) et l'anneau glissant (9) sont formés de céramiques,
- les faces d'extrémité (9c, 9d ; 10c, 10d) sont arrondies pour définir des contacts linéaires glissants circonférentiels avec les surfaces de glissement supplémentaires (8c).

3. Palier selon la revendication 2, dans lequel l'anneau glissant coaxial (9) a une section transversale circulaire.

4. Palier selon la revendication 2, dans lequel l'anneau glissant coaxial (10) a une section transversale allongée réalisant des surfaces de glissement intérieure et extérieure allongées axialement (10b, 10a) et des faces d'extrémité en portions de cercle (10c, 10d).
